# EUROPEAN PATENT APPLICATION

(11) **EP 4 310 493 A1**
(43) Date of publication of application: **24.01.2024**
(21) Application number: 22186311.1
(22) Date of filing: 21.07.2022
(51) Int. Cl.: G01N 29/11, G01N 29/22, G01N 29/06

(54) **INSPECTION DEVICE FOR TUBULAR GOOD WITH ULTRASONIC SENSORS**

(71) Applicant: Vallourec Oil and Gas France, 59620 Aulnoye-Aymeries (FR)
(72) Inventor: Kling e Silva, Lucas, 92190 Meudon (FR); CAMERINI, Claudio, 92190 Meudon (FR)
(74) Representative: Francillout, Matthieu

(57) **Abstract**

An inspection device (1) for a tubular good comprising a first body part (2), a second body part (4) rotatably mounted on the first body part, a body motor (5) arranged to rotate the second body part (4), whereas the second body part comprises at least one array of ultrasonic sensors (41, 51), the inspection device (1) further comprising scanning electronics (9) mounted on said second body part (4), said scanning electronics (9) being connected to the ultrasonic sensors (41, 51), wherein said scanning electronics (9) comprises a circuitry arranged to drive emission and reception of ultrasonic signals by ultrasonic sensors (41, 51) of said array of ultrasonic sensors and said scanning electronics being arranged to generate an A-scan, wherein scanning electronics (9) and ultrasonic sensors (41, 51) are mounted on the second body part (4) such that scanning electronics (9) and ultrasonic sensors (41, 51) are rotated at a same rotation speed when second body part (4) is rotated.

## Description

The present invention relates to the technical field of devices for inspecting tubular goods, in particular for oil country tubular goods, pipelines for transportation of petroleum, gas, water.

Tubular goods manufacturers, especially in the field of oil and gas, need to meet specific quality requirements concerning internal parameters, such as the wall thicknesses, internal diameters or absence of defects at the surface.

Indeed, like most metallurgical products, tubes are liable to present defects linked to their manufacture or usage, such as material inclusions in the steel, cracks on their internal surface or their external surface, or even porosities. In general, any heterogeneity in the steel matrix is seen as an imperfection which is likely to harm the mechanical strength of the tube in service. Also, these metallurgical products can have surface defects due to metal loss, corrosion or cracks. There is a need to inspect and detect defects both immediately after manufacturing or after use and re-use of a tubular.

The tubes are therefore checked after their manufacture or after period of use, not only to detect any defects therein, but also, where appropriate, to determine useful information for evaluating the dangerousness of these defects, in particular their size, their depth, their position, their nature or even their orientation, and the satisfaction of these tubes with standards. Tubes are also checked periodically during their lifetime, especially pipelines

In particular, non-destructive testing techniques using ultrasonic waves are used. For search of defects, ultrasonic waves are propagated in the tube and one searches, among the waves reflected by the tube, for those which cannot be attributed to the geometry of the tube. Defects such as inclusions or absences of matter constitute variations within the medium of propagation of the wave, and therefore generate the reflection of part of the energy of the ultrasonic waves when they are struck by these ultrasonic waves.

A first type of sensor used for control using ultrasonic waves is of the single piezoelectric type. Another type of sensor is of the multielement and sequentially controlled type, generally called "multielement sensor" or by the English expression "phased array". This type of sensor comprises a plurality of electroacoustic elements, generally in the form of piezoelectric elements. These piezoelectric elements can be distributed over an active face of the sensor surrounding the tube to be controlled or along a main alignment direction so as to form a "bar".

Pipeline inspection apparatus are used in the industry. Nevertheless, they present limitation so as their accuracy, and these devices are expensive.

Document US3810384 describes a pipeline inspection apparatus comprising ultrasonic sensors mounted on a rotating assembly, the sensors being linked to control electronics by slip rings. This device has limited capabilities about speed of inspection and quality of measurements done, particularly, resolution of inspection is low.

The invention aims at overcoming the above-mentioned drawback.

More specifically, the invention aims at improving accuracy of measures in a cost-effective device.

Advantageously, scanning electronics and ultrasonic sensors are mounted on the rotating body such that scanning electronics and ultrasonic sensors are rotated at a same rotation speed during use of the device avoiding any signal noise coming from slip-ring during acquisition.

In one embodiment, the invention is an inspection device for a tubular good comprising a first body part, a mains axis Xx corresponding to the direction of displacement of the inspection device along the length of a tubular good, a second body part rotatably mounted on the first body part, a body motor arranged to rotate the second body part around axis Xx relatively to the first body part, whereas the second body part comprises at least one array of ultrasonic sensors, the inspection device further comprising scanning electronics mounted on said second body part and said scanning electronics being connected to the ultrasonic sensors, wherein said scanning electronics comprises a circuitry arranged to drive emission and reception of ultrasonic signals by ultrasonic sensors of said array of ultrasonic sensors and said scanning electronics being arranged to generate an A-scan, wherein scanning electronics and ultrasonic sensors are mounted on the rotating second body part such that scanning electronics and ultrasonic sensors are rotated at a same rotation speed when second body part is rotated, said rotation speed being of at least 0.5 rotation per second.

The inspection device for a tubular good may have a rotation speed of at most 6 rotations per second, preferably 3 rotations per second.

The inspection device for a tubular good may comprise in succession axially, a first seal disc, the second body part, a second seal disc, wherein first seal disc and second seal disc are arranged to retain an acoustic coupling liquid in the space defined by first seal disc and second seal discs when the inspection device is inside a tubular good.

The inspection device for a tubular good may further comprise multiple arms mounted on the second body part, the ultrasonic sensors being housed in a corresponding shoe, each shoe being mounted on top part being rotatably mounted on a lower part, said lower part being pivotably mounted on the second body part.

According to one aspect, the inspection device for a tubular good may comprise at least one array of four ultrasonic sensors arranged to measure wall thickness of a tubular good, preferably sixteen ultrasonic sensors arranged to measure wall thicknesses.

According to another aspect, the inspection device for a tubular good comprises at least one array of four ultrasonic sensors arranged to detect cracks in a surface of a tubular good.

In a variation, the inspection device for a tubular good comprises two arrays of six angled ultrasonic sensors arranged to detect longitudinal cracks in a surface of a tubular good, and two arrays of four angled ultrasonic sensors arranged to detect circumferential cracks in a surface of said tubular good.

The present invention and its advantages will be better understood by studying the detailed description of specific embodiments given by way of nonlimiting examples and illustrated by the appended drawings on which:
- figure 1 is a perspective view of a device according to a first embodiment of the invention,
- figure 2 is a detail view of the device of figure 1 including focusing on the assembly having ultrasonic sensors and scanning electronics,
- figure 3 is a schematic view of a typical A-scan
- figure 4 is a perspective view of a first mounting of an ultrasonic sensor
- figure 5 is a perspective view of a second mounting of an ultrasonic sensor
- figure 6 is an axial cross-section view of the device of figure 1

In the field of ultrasound non-destructive testing the following terminology is frequently used:
- "scan" denotes a set of relative tube/sensor positions,
- "increment" denotes the scan period (inversely proportional to the frequency of recurrence or frequency of ultrasound bursts),

Ultrasonic bursts are computed into representations known by the man ordinary skilled in the art and familiar with non-destructive testing. These representations are in two dimensions and comprises an Sx axis in abscissa and an Sy axis in ordinate. These representations must be computed by a specific electronic having certain calculation power.
- "A-scan" denotes the graph of the electrical voltage measured at the terminals of an ultrasound sensor, with the time-of-flight on the Sx-axis and a representation of the electrical voltage, also called ultrasound amplitude, on the Sy-axis,
- "B-scan" denotes an image relating to a given increment value, with the scan corresponding to the ultrasound burst on the Sx-axis, the time-of-flight on the Sy-axis, and at each point the converted ultrasound amplitude in greyscale or in colour (electronic scan for a phased array sensor, mechanical scan for a single-element sensor),
- "C-scan" denotes an image with the equivalent position in a planar space of the burst point of the ultrasound wave on both Sx-axis and Sy-axis, converted to greyscale or colour, representing the maximum ultrasound amplitude for this burst recorded in the temporal selector in question from the A-scan ("image amplitude"). In the case of a tube, a point on the Sx-axis of the C-scan corresponds to a position on the length of the tubular good and a point on the y-axis corresponds to a position on the circumference of the tubular good,
- "Echo-dynamic" generally denotes the graph of a curve representing the maximum amplitude received as a function of the incremental position of the sensor, for example the burst number when there is one burst per position of the sensor.
- In the case of a flat product, a point on the Sx-axis of the C-scan corresponds to a position on the length of the flat product and a point on the Sy-axis corresponds to a position on the width of the flat product.

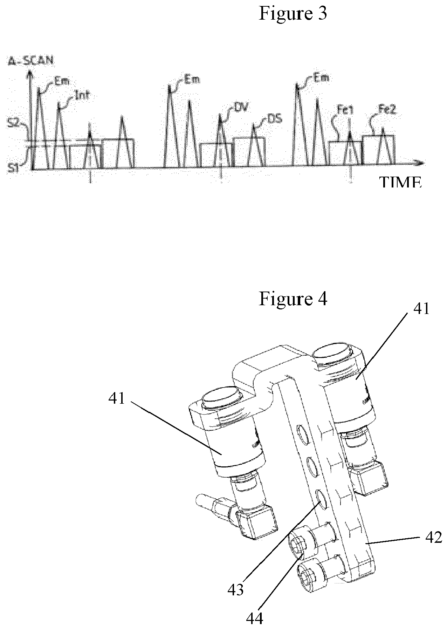

Figure 3 diagrammatically represents the time profile of signals received on return, known as A-scan. Such a signal comprises pulses Em of the beam emitted and the pulses of the echoes received on return. The A-scan signal can comprise a series of pulses Em, followed by pulses Int of echoes from the interface between the water and the external surface of the tubular product, then, in the presence of defects on the internal surface of the tube and/or on the external surface thereof, echo signals relating to defects on the internal surface Dv and echo signals relating to defects on the external surface Ds. In practice, the interface echo Int is preponderant over an echo Ds due to a defect on the external surface of the tubular product and masks this echo Ds. This is why the echo Ds of a defect on the external surface is generally received on the beam reflected by the internal surface of the tubular product.

It is defined an orthonormal direct vector basis attached to the body parts of the device. The vector basis consists of a vector X, a vector Y and a vector Z. The vector X is parallel to a longitudinal direction of bodies of the device, so defining an axis Xx going through center of the bodies.

In the present application, the word "cylindrical" and variations thereof will be understood according to its common definition, being namely that a cylindrical surface is a surface consisting of all the points on all the lines which are parallel to a given line and which pass through a fixed plane curve in a plane not parallel to the given line.

In the present application, unless specified otherwise, the terms "axial", "radial", "tangential" and variations thereof will be understood referring relative to the axis Xx.

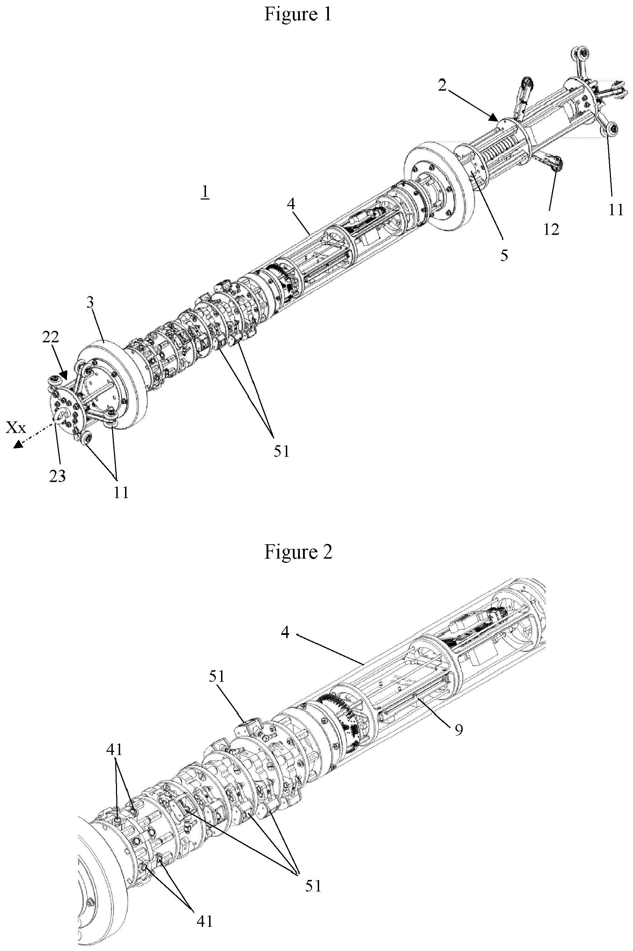

Figure 1 is a perspective representation of an inspection device 1 for a tubular good according to a first embodiment of the invention. The inspection device comprises a first body part 2 and a second body part 4. The second body part 4 is rotatably mounted on first body part 2. The inspection device comprises a body motor 5 arranged to rotate the second body part 4 relatively to the first body part 2. The relative rotation speed of the second body part 4 relatively to the first body part 2 is at least 0.5 rotation per second.

Trials have been done with prototypes of device according to invention and rotation speed was set at 3 rotations per second to the benefit of efficiency of the measurements done with the inspection device 1. The rotation speed can be increased up to 6 rotations per second.

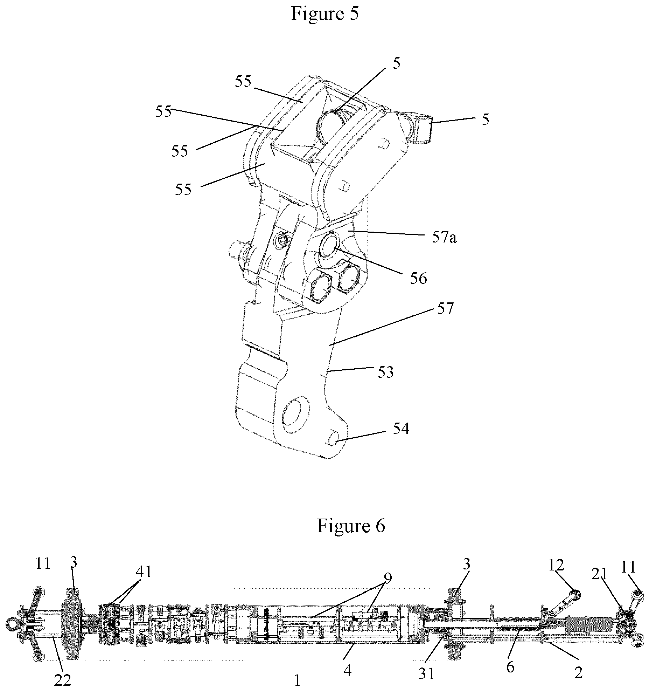

The first body part 2 is arranged to position the inspection device 1 into the tubular good to be inspected and to allow propelling or to propel the inspection device 1 into the tubular good. In the embodiment of figure 1, the second body part comprises a hook 21 visible on fig. 6 which is an axial cross-section view of the inspection device 1 of figure 1. The inspection device 1 also comprises a third body part 22 which is axially positioned on a side of the second body part 4 opposite of the side where first body part 2 is linked to second body part 4. The third body part 22 is rotatably assembled to the second body part 4. The third body part 22 also comprises a hook 23. The hooks (21, 23) allow an operator or a machine to pull the inspection device 1 into a tubular good in both directions along axis Xx.

Also, the inspection device 1 may comprise a propelling motor mounted on first body part 2 to propel the inspection device 1, which is particularly useful when the tubular good has a long length, such as a pipeline.

The first body part 2 comprises wheels 11 to allow displacement of the inspection device 1. Wheels 11 are distributed on at least two axial locations and circumferentially on 360°. In the present embodiment, the Inspection device has two sets of 3 wheels 11 on the first body part 2 and a set of three wheels 11 on the third body part 22.

The first body part 2 comprises an odometer 12. Odometer 12 counts travel distance of the inspection device inside the tubular good so that longitudinal position of the inspection device 1 in the tubular device is determined.

The inspection device of figure 1 is supplied with electrical energy brought by an electrical cable not represented. Alternatively, the inspection device may have batteries housed in first body part 2.

The inspection device 1 comprises a body motor 5 driving in rotation the second body part 4 relatively to the first body part 2. Taking into account the point of contacts of the first body part 2 into a tubular good that provide resistance to rotation to the first body part 2, the second body part 4 will rotate inside the tubular good.

The inspection device 1 comprises a slip ring 6 between the first body part 2 and the second body part 4 to electrically connect the first body part 2 to the second body part 4. This electrical connection is arranged to provide electrical power to equipment embedded in the second body part 4, that is scanning electronics 9.

In a variation, a data link can be established wirelessly between the first body part 2 and the second body part 4.

In an alternative variation, data measured or computed by scanning electronics 9 can be retrieved on one side, data measured by odometer's electronic can be retrieved on another side, and the data may be merged in a computer terminal.

The second body part 4 comprises ultrasonic sensors 7. The ultrasonic sensors 7 may be wall thickness ultrasonic sensors, that is ultrasonic sensors with a normal ultrasound emission, that is ultrasound waves emitted in a radial direction relatively to axis Xx. ultrasonic sensors 7 may be ultrasonic sensors for detection of defects, that is with an angled emission angle, such as 45° angle, phased array sensors, or any kind of ultrasonic sensors.

An essential aspect of the invention is that the second body part 4 comprises scanning electronics 8 which is arranged to trigger the ultrasonic sensors to emit bursts and to receive an ultrasonic wave, and the scanning electronics is further arranged to compute an A-Scan based on the received ultrasonic waves in response to ultrasonic bursts. The tests conducted show that having the scanning electronic mounted within the second body part 4 improves the signals with less noise generated in comparison with such an electronic mounted on the first body part 2, the scanning electronic then being linked to the ultrasonic sensors through the slip ring 6. Having the scanning electronics rotating together with the ultrasonic sensors in the second body part 4 avoid degradation of signal by slip ring 6.

In a variation, the scanning electronic may be arranged to further compute B-scans.

In an additional variation, the scanning electronic may be arranged to further compute C-scans based on A-scans and distance data provided through odometer 12.

The second body part 4 is axially surrounded by two seal discs 3. The two seal discs 3 are arranged to maintain a quantity of a coupling medium in the tubular good at the location of the second body part 4 in order to provide a coupling medium between ultrasonic sensors and the tubular component as support of propagation of ultrasonic waves emitted and received by the ultrasonic sensors of the second body part 4. The preferred coupling medium is water. The coupling medium is brought in the space defined by the two seal discs by at least one hose 31. The hose 31 is mounted onto the first body part 2 and can be connected to an external hose. It is not necessary that the seal discs rotate, so one of the seal discs 3 is mounted on the first body part 2 and the other one of the seal discs 3 is mounted on the third body part 22. Some coupling medium may flow between the seal discs and internal wall of the tubular good as a leak is admissible as long as it is compensated by supply of coupling medium through the hose 31. On the contrary, a limited leak ensure that the space delimited by the seal discs and the internal wall of the tubular good is correctly filed with coupling medium. For example, the seal discs are cut from a 30 mm thick sheet of EVA.

The second body part 4 comprises wall thickness sensors. Wall thickness sensors 41 are conventional ultrasonic sensors. Wall thickness sensors 41 are arranged to emit ultrasonic waves in a direction normal to the axis X, so in a radial direction, orthogonally to axis Xx. Each ultrasonic sensor 41 measures the thicknesses of the wall of the tubular component, at different positions. The principle of this ultrasonic measurement is known. It uses the time difference between the echo obtained on the inner wall of the tubular good through the coupling medium, and the first echo which follows, which corresponds to a reflection (or backscatter) of ultrasound on the external wall of the tubular good.

The wall thickness sensors 41 are mounted on extensions 42, one of which is showed in figure 4. The extension 42 has a radial position which can be set-up. In the example of figure 4, extensions 42 have through holes 43 and bolt 44 that serves to adjust the radial position of the ultrasonic sensors 41. Thus, the space between the internal wall of the tubular good and the ultrasonic sensor can be minimized depending on the internal diameter of the tubular good to inspect, even if a tight contact between ultrasonic sensor and the internal wall is not necessary in the case of wall thickness measurements. Extensions 42 have two ultrasonic sensors 41, but there may be one ultrasonic sensor or more than two ultrasonic sensors.

The second body part 4 of figure 1 comprises a set of ultrasonic sensors arranged to detect cracks, which will be named hereafter crack sensors 51. The crack sensors 51 are mounted on a first extremity of rotating arms 53 detailed in figure 5. Rotating arms 53 have a second extremity which are mounted on the second body part 4 thanks to a pivot liaison 54. The rotation axis of pivot liaison 54 is substantially parallel to main axis X of inspection device 1. Such degree of freedom of the rotating arms 53 allow the crack sensors 51 to fit the internal wall of the tubular good to be inspected. A spring element as a rotary spring included in pivot liaison 54 pushes the first extremity of rotating arms 53 away from the axis Xx. The rotating arms can have multiple operating positions between a retracted position and a deployed position. Therefore, the inspection device 1 can easily fit into tubular goods of different internal diameters and operates the ultrasonic measurements. The prototype developed can fit in tubular goods ranging from 3.5 inches to 7 inches, which allows to have one device for inspecting multiple sizes of tubular goods. Even greater sizes are accessible with a unique device.

The crack sensors are mounted in a shoe 55 having a top surface 55a arranged to be in contact with arcuate surface of inner wall of the tubular good. The top surface 55a comprises sacrificial pad 55c protecting the top surface 55a of the shoe 55 from wear due to friction between the shoe and the inner wall of the tubular good. Shoe 55 has a stabbing surface 55b having an arcuate profile, to smoothen the entry in contact of the shoe 55 and the inner wall of the tubular good. The rotating arm 53 comprises a top part 57a on which is mounted the shoe 55, said top part 57a being rotatably mounted on a lower part 57b through a second liaison pivot 56, which provides for further adaptation of the positioning of the shoe and improves contact between the shoe and an internal wall of the tubular good. This further rotation improves the adaptability of the rotating arms to different internal diameters to be inspected.

The device of figure 1 comprises eight extensions 42 having each two wall thickness sensors, so a total of sixteen wall thickness ultrasonic sensors 41, and five rows of two rotating arms 53 having each one crack sensors 51, so that there are five angled crack sensors at +45° and five angled crack sensors at -45°. As all these sensors are rotating during an inspection, the sensors make measurements at a great quantity of positions.

Indeed, when the inspection device is operating an inspection of a tubular good, the second body part 4 is rotating under drive of body motor 5 at a rotational speed ranging from 0.5 rotation per second to 6 rotations per second. Trials have been conducted at the speed of 3 rotations per second. Thus, the ultrasonic sensors, wall thickness sensors and cracks sensors are rotating at the rotating speed of the second body part 4.

The scanning electronics 9 triggers each of the ultrasonic sensors at a time interval such that on one turn of the sensors, several bursts are triggered at regular time intervals. For example, 300 bursts are triggered for one turn, leading to 900 bursts per second at a rotating speed of 3 turns per second. It results from this a resolution of scanning which is far greater than the scan that could be operated by an inspection device having non-rotating ultrasonic sensors, that must be spaced radially one from each other.

Scanning electronics 9 collects the echoes signals received by ultrasonic sensors in response to each burst, resulting in echo-dynamics that are stored in a memory of the scanning electronics 9 associated with at least a time stamp, so that position is radially and longitudinally known thanks to the time stamp, as on the other side, the longitudinal position of the inspection device 1 is given by odometer 12, which outputs incremental longitudinal positions, and each longitudinal position being time stamped. In an analog manner, the rotation of the second body part is monitored through the driving electronics of the motor, outputting time stamped circumferential positions. Consequently, longitudinal and circumferential positions of each sensors is known at each time of the inspection.

Then scanning electronics 9 computes the echo-dynamics to output corresponding A-scans, that is A-scan for wall thickness measurements and cracks measurements.

As a result, it is provided an inspection device with improved resolution, with a 2x2 mm mesh obtained with prototype, in a cost effective device, so with less sensors, so introducing rotation and improving noise by bringing electronic in the rotating part of the device.

Inspection of a 12 meters pipe can take from 3 to 8 minutes.

On another aspect, the inspection device allows to get the wall thickness measurements from scanning electronics 9 and the odometer measurements computed together to output a wall thickness mapping of the tubular good in high resolution. The wall thickness mapping may be done in 3 dimensions graphic.

## Claims

1. Inspection device (1) for a tubular good comprising a first body part (2), a mains axis Xx corresponding to the direction of displacement of the inspection device (1) along the length of a tubular good, a second body part (4) rotatably mounted on the first body part, a body motor (5) arranged to rotate the second body part (4) around axis Xx relatively to the first body part (2), whereas the second body part comprises at least one array of ultrasonic sensors (41, 51), the inspection device (1) further comprising scanning electronics (9) mounted on said second body part (4), said scanning electronics (9) being connected to the ultrasonic sensors (41, 51), wherein said scanning electronics (9) comprises a circuitry arranged to drive emission and reception of ultrasonic signals by ultrasonic sensors (41, 51) of said array of ultrasonic sensors and said scanning electronics being arranged to generate an A-scan, wherein scanning electronics (9) and ultrasonic sensors (41, 51) are mounted on the second body part (4) such that scanning electronics (9) and ultrasonic sensors (41, 51) are rotated at a same rotation speed when second body part (4) is rotated, said rotation speed being of at least 0.5 rotation per second.

2. Inspection device (1) for a tubular good according to claim 1 wherein rotation speed is at most 6 rotations per second, preferably 3 rotations per second.

3. Inspection device for a tubular good according of to claim 1 or 2 comprising in succession axially, a first seal disc, the second body part, a second seal disc, wherein first seal disc and second seal disc are arranged to retain an acoustic coupling liquid in the space defined by first seal disc and second seal discs when the inspection device is inside a tubular good.

4. Inspection device for a tubular good according to any of claims 1 to 3 further comprising multiple arms mounted on the second body part, the ultrasonic sensors being housed in a corresponding shoe, each shoe being mounted on top part 47a being rotatably mounted on a lower part 47b, said lower part 47b being pivotably mounted on the second body part 4.

5. Inspection device for a tubular good according to any of preceding claims comprising at least one array of four ultrasonic sensors (41) arranged to measure wall thickness of a tubular good, preferably sixteen ultrasonic sensors arranged to measure wall thicknesses.

6. Inspection device for a tubular good according to any of preceding claims comprising at least one array of four ultrasonic sensors (51) arranged to detect cracks in a surface of a tubular good.

7. Inspection device for a tubular good according to claim 6 further comprising two arrays of six angled ultrasonic sensors (51) arranged to detect longitudinal cracks in a surface of a tubular good, and two arrays of four angled ultrasonic sensors (51) arranged to detect circumferential cracks in a surface of said tubular good.
